(19) Europäisches Patentamt
European Patent Office
Office européen des brevets

(11) Publication number: **0 295 013 B1**

(12) **EUROPEAN PATENT SPECIFICATION**

(45) Date of publication of patent specification: **15.04.92**

(51) Int. Cl.5: **C09J 5/02**, C08J 5/12, C09J 133/00

(21) Application number: **88305082.5**

(22) Date of filing: **03.06.88**

(54) **Primer composition and use thereof in bonding non-polar substrates.**

(30) Priority: **05.06.87 IE 1493/87**

(43) Date of publication of application:
**14.12.88 Bulletin 88/50**

(45) Publication of the grant of the patent:
**15.04.92 Bulletin 92/16**

(84) Designated Contracting States:
**DE FR GB IT SE**

(56) References cited:
**FR-A- 2 359 890**
**US-A- 3 260 637**

**CHEMICAL ABSTRACTS, vol. 106, 1987, page 10, abstract no. 33608q, Columbus, Ohio, US; & JP-A-61 126 190 (TAOKA CHEM. CO. LTD) 13-06-1986**

(73) Proprietor: **LOCTITE (IRELAND) Ltd.**
**Whitestown Industrial Estate**
**Tallaght, Co. Dublin 24(IE)**

(72) Inventor: **McDonnell, Patrick F.**
**31 Parkmore Drive**
**Terenure Dublin 6(IE)**

(74) Representative: **Marchant, James Ian et al**
**Elkington and Fife Prospect House 8 Pembroke Road**
**Sevenoaks, Kent TN13 1XR(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

EP 0 295 013 B1

## Description

The present invention relates to the use of a primer to promote the bonding of non-polar or highly crystalline substrates with adhesives, especially with cyanoacrylate adhesives. In particular, the primer is used to promote bonding of polyolefins or similar plastic substrates with low surface energy.

It is an object of this invention to provide a primer which is useful in bonding non-polar plastics to themselves, or to other substrates which may be polar or non polar : the primer is used to treat the non-polar substrate (s) on which a cyanoacrylate is applied. Such plastics, which are normally difficult to bond, even with cyanoacrylate adhesives, are represented by linear polymers of simple olefins, such as polyethylene, polypropylene, polybutene and the like, including their copolymers. Additional non-polar materials which can be bonded in accordance with the practice of the present invention are those having low surface energy such as polyacetals, plasticized PVC (polyvinylchloride), polyurethane, EPDM (ethylenepropylenediamine monomer) rubber, thermoplastic rubbers based on vulcanised polyolefins and the like.

The materials bonded by this invention have, in general, a waxy, paraffin-like surface character, with a low critical surface tension of wetting and may have at their surface a weak boundary layer. In general, there is an absence of polar groups which are necessary to raise the surface energy to the level needed to give adhesion with conventional adhesives.

Various surface treatments have been used heretofore to improve adhesion of the difficult-to-bond materials described above. These treatments include corona discharge (J.C. Von der Heide & H.L. Wilson, Modern Plastics 38 9 (1961) p199), flame treatment (E.F. Buchel. British Plastics 37 (1964) p142). U.V. radiation (Practising Polymer Surface Chemistry. D. Dwight. Chemtech (March 1982) p166), surface abrasion, plasma treatment, hot chlorinated solvents, dichromate/sulphuric acid and chlorine/U.V. radiation (D.Brewis & D.Briggs, Polymer 22 7 1981) and references therein. All the above treatments are effective to some degree and are generally thought to work by introducing polar groups on non-polar substrates.

While the above treatments may, on occasion, improve the ability of difficult substrates to be bonded with adhesives, the treatments have the disadvantage of requiring specialized apparatus and equipment and can involve corrosive and/or hazardous materials.

Apart from the above treatments there are examples in the prior art of the use of various accelerators or initiators of the polymerization of the cyanoacrylate monomer. The disadvantage with such accelerators or initiators is that while the speed of cure of the bond is increased, adhesion on non-polar substrates is not promoted and the resulting bond can be very weak and the adhesive can slip off the substrate.

An accelerator comprising a solution of an amine and a deodorant is disclosed in Japanese Patent Application No. 599066471-A. The amine may be triethylamine, diethylamine, butylamine, isopropylamine. tributylamine, N.N-dimethylamine, N,N-diethylaniline, N,N-dimethyl-p-toluidine, N,N-dimethyl-m-toluidine, N,N-dimethyl-o-toluidine, dimethylbenzylamine, pyridine, vinylpyridine, ethanolamine or ethylendiamine; and the deodorant may be a natural material such as a tree oil or a synthetic compound such as lauryl methacrylate. United States Patent No. 3 260 637 of Von Bramer discloses the use of various classes of organic amines (but specifically excludes primary amines) as accelerators in conjunction with cyanoacrylate adhesives. The compositions of both of these specifications can best be described as accelerators or initiators of the polymerization of cyanoacrylate monomer without improving adhesion on non-polar substrates.

Various primers also have been proposed to promote adhesion. For example, Japanese Patent Applications Nos. 52-98062, 56-141328 and 57-119929 suggest the use of primers prepared by dissolving a chlorinated polyethylene or chlorinated polypropylene or a fatty acid-modified acrylated alkyd resin in an organic acid. In general, however, organic acids tend to inhibit or prevent curing of cyanoacrylate adhesives. The primer of the present invention has the advantage of using a low molecular weight material which is readily soluble in common solvents.

European Specification No. 0 129 069 A2 discloses the use of a primer comprising at least one organometallic compound, for use with alpha-cyanoacrylate adhesives, which is useful in bonding non-polar substrates. Japanese Application No. 61023630 proposes organometallic primers for joining plastic models. Both of these documents disclose the use of organo-metallic compounds which are potentially highly toxic materials.

Primers for polyolefins comprising (i) modified or grafted polyolefins such as chlorinated polyolefins, ethylene/vinyl copolymer or ethylene/propylene terpolymer, (ii) a crosslinkable binder and (iii) crosslinking agents, are disclosed in European Application No. 187171A. The primer described there is somewhat inconvenient to use and apply due to its rubbery consistency, and heating may be needed to activate the primer on the substrate. In addition the solvents used (e.g. toluene and 1,1,1-trichloroethylene) have an

undesirable toxicity.

German Application No. DE 3601518-A suggests the use of primers for polyolefins comprising an organometallic compound and an organic polymer; the organometallic compound being a metal alcoholate and the term "metal" including metalloids, phosphorous, boron or silicon atoms. The materials disclosed such as dibutylin diacetate and other organo-metallic compounds are highly toxic for use as primers.

Japanese Application No. 61136567 describes a titanate primer for bonding polypropylene. The titanate primers give little or no improvement when bonding a difficult material, such as polyethylene, to itself or to other materials, when cyanoacrylate adhesives are employed.

Japanese Application No. 60157940 discloses a primer composition based on a solution of 4-vinyl pyridine as an essential ingredient, and 3, 4-lutidine as an optional ingredient, for bonding polyolefins, polyacetal, polyamide, polyester, boron-polymer, silicone or PVC. However, the disadvantage with the primer of Japanese Application No. 60157940 is that it has a strong odour and, in addition, it does not produce as strong a bond as that produced by the primer of the present invention.

The invention reduces the above problems by providing a process for conditioning a non-polar substrate for bonding with a cyanoacrylate adhesive, with an adhesion-promoting primer characterized in that the primer comprises a solution of a primary aliphatic amine of the general Formula (I):

$$R\text{--}NH_2 \qquad (I)$$

in a solvent wherein R is a branched or straight-chained aliphatic group having from 6 to 20 carbon atoms and the concentration of the amine in the solvent is from 0.001-30% weight/volume.

Preferably R is a hydrocarbyl group, more particularly an alkyl group.

Preferred solvents according to the invention contain a ketone, an aldehyde or a solvent mixture containing a ketone and another solvent. Particularly preferred solvents are acetone, methyl ethyl ketone, methylisobutyl-ketone, diethylketone or mixtures of solvents containing these materials.

The preferred primary aliphatic amines are straight-chained octylamine, nonylamine and decylamine.

While it is well known that solutions of amines and other organic and inorganic bases will accelerate the cure of cyanoacrylate adhesives, it is surprising that use of such primers also confers adhesion on non-polar substrates. The curing or polymerisation of a film of cyanoacrylate, between two materials, does not necessarily result in a strong bond, particularly if the materials are non-polar, and if the polymerisation of the cyanoacrylate is excessively rapid, a very weak bond or no bond will result.

The primer composed of the primary amine in a ketone-containing solvent is normally used at such a concentration that the thickness of the coating can be controlled to achieve the full effects of this invention.

Preferred concentrations of the amine in the solvent are 0.1 - 2% weight/volume.

The invention also provides a two-part adhesive system for bonding non-polar substrates to each other or to polar substrates comprising:

(i) a cyanoacrylate adhesive, and

(ii) an adhesion-promoting primer as defined in claim 1.

Suitable cyanoacrylate adhesives for use with the primer of this invention are represented by the general formula

$$CH_2 = \underset{\displaystyle CN}{\overset{}{\underset{|}{C}}} - COOR^1 \qquad (II)$$

wherein $R^1$ is alkyl, alkenyl, cycloalkyl, aryl, alkoxyalkyl, aralkyl, haloalkyl or another suitable group. The lower alkyl alpha-cyanoacrylates are preferred, and in particular methyl, ethyl, n-propyl, n-butyl, isobutyl, isopropyl, allyl, cyclohexyl, methoxyethyl or ethoxyethyl cyanoacrylates are preferred.

Many alpha-cyanoacrylates can be obtained commercially as one component instant adhesives, in which form they may be used in this invention.

While these commercially available cyanoacrylates are composed principally of alpha-cyanoacrylate monomer, the formulation may contain stabilizers, thickeners, adhesion promoters, plasticizers, dyes, heat resistant additives, impact resistance modifiers, perfumes and such like.

A diluted solution of a cyanoacrylate adhesive in a compatible solvent may also be used.

In a further aspect the invention provides a method of bonding a non-polar substrate to another substrate which may be polar or non-polar, which comprises

(1) treating the non-polar substrate or substrates with an adhesion-promoting primer solution;
(2) allowing the primer solution to dry;
(3) applying a cyanoacrylate adhesive to either substrate or both substrates; and,
(4) mating the surfaces to be bonded; wherein the primer solution comprises a primary aliphatic amine of the general Formula (I):

(I) $R\text{--}NH_2$

in a solvent wherein R is a branched or straight-chained aliphatic group having from 6 to 20 carbon atoms and the concentration of the amine in the solvent is from 0.001-30% weight/volume.

In the case where the substrates to be bonded are both non-polar or otherwise difficult-to-bond materials of that type, both substrates are coated with a solution of primer. This coating may suitably be applied by brush, spray or immersion of the substrate in the primer solution. If the non-polar substrate is to be bonded to a polar or more active substrate, only the non-polar substrate needs to be coated with the primer.

After application the primer is normally air dried under non-forced conditions; firstly to allow the solvent to evaporate off and, secondly to allow the amine to condition the surface to facilitate bonding with cyanoacrylate adhesives. In the first or solvent-drying stage, a period of about 15-60 seconds, preferably about 30 seconds, is usually suitable, depending on solvent type and ambient conditions. In the second or conditioning stage, a period of from 30 seconds to 30 minutes is usually suitable, depending on the amine type and ambient conditions. A certain proportion of the amine may evaporate off during the conditioning stage. The preferred conditioning period is from 3 to 30 minutes.

The cyanoacrylate should be applied to the primed surface within the preferred conditioning time range. If the adhesive is applied too soon, the surface may be excessively active and induce premature polymerisation of the adhesive. If the application of the adhesive is unduly delayed, the conditioning effect of the primer may be insufficient to realise the full benefits of this invention. Following application of the primer to the non-polar substrates, the bond is completed using cyanoacrylate adhesive in the normal manner.

Bonding tests were carried out using various substrates, including natural polyethylene and natural polypropylene as the non-polar substrates, various amine solutions as the primer and various grades of cyanoacrylate adhesive commercially available from Loctite (Ireland) Limited, Dublin, Ireland. The bond strength of the resulting joints was determined using conventional methods, such as a tensile testing machine.

The following examples will more clearly illustrate the invention.

EXAMPLE 1

1.0g of n-octylamine was dissolved in 99.0cc of acetone to form a primer solution.

Test pieces of natural polyethylene and natural polypropylene of dimensions 100 mm x 25 mm and 3 mm in thickness were carefully deburred and degreased with acetone. The above primer was applied to the test pieces by brush and allowed to dry for about 3 minutes in air under unforced conditions. Two test pieces, both of which were primer-coated as above, were then bonded with Loctite 406 (a cyanoacrylate adhesive manufactured by Loctite Corporation, Newington, CT, U.S.A.). The overlap bond area was 150 $mm^2$. The bonds were clamped with a force of 0.04 $kg/mm^2$ for 24 hours at a temperature of 22 °C.

The tensile shear bond strength was then determined on an Instron testing machine at a pulling rate of 200 mm/min. according to Test Method ASTM D1002.

As control, the above procedure was repeated, except that no primer was used.

The results are shown in Table 1.

TABLE 1

| TENSILE SHEAR BOND STRENGTH WITH OCTYLAMINE PRIMER | | | |
|---|---|---|---|
| | | Tensile Shear Bond Strength ($kg/cm^2$) | |
| Primer Type | Run No. | Polyethylene/Polyethylene | Polypropylene/Polypropylene |
| n-Octylamine | 1<br>2<br>3 | 48<br>49<br>19 | 105<br>110<br>63 |
| Control (No primer) | 1<br>2<br>3 | 0<br>0<br>0 | 9<br>10<br>6 |

EXAMPLE 2

Primer solutions were prepared by dissolving in 99.0cc of acetone 1.0g each of the following straight-chained amines : hexylamine, heptylamine, nonylamine decylamine, undecylamine, dodecylamine, tridecylamine, tetradecylamine and hexadecylamine. For comparison, butylamine, propylamine and amylamine were included.

Test pieces of natural polyethylene were prepared and treated with primer or control as in Example 1. Bonds with Loctite 406 cyanoacrylate adhesive were prepared, aged and tested as in Example 1.

The results are shown in Table 2.

TABLE 2

| POLYETHYLENE BOND STRENGTHS WITH VARIOUS PRIMERS | | | |
|---|---|---|---|
| | Tensile Shear Bond Strength($kg/cm^2$) | | |
| | Polyethylene/Polyethylene | | |
| Primer Type | Run 1 | Run 2 | Run 3 |
| Hexylamine | 10 | 10 | 9 |
| Heptylamine | 11 | 11 | 9 |
| Nonylamine | 56 | 31 | 70 |
| Decylamine | 85 | 58 | 45 |
| Undecylamine | 64 | 71 | 54 |
| Dodecylamine | 22 | 38 | 31 |
| Tridecylamine | 31 | 43 | 52 |
| Tetradecylamine | 64 | 67 | 51 |
| Hexadecylamine | 42 | 43 | 55 |
| Comparative Solutions | | | |
| Butylamine | 0 | 0 | 0 |
| Propylamine | 0 | 0 | 0 |
| Amylamine | 0 | 0 | 0 |
| Control (No primer) | 0 | 0 | 0 |

EXAMPLE 3

Primer solutions were prepared by dissolving 1.0g of n-octylamine in 99.0cc of each of methylethylketone; methylisobutylketone; Freon TA (trade mark for azeotrope of acetone and 1,1,2-trichloro-1,2,2-trifluoroethane available from E.I. Du Pont de Nemours & Co. Inc.), 1,1, 1-trichlorethane and methanol.

Test pieces of natural polyethylene were prepared and treated with primer or controls as in Example 1.

Bonds with Loctite 406 cyanoacrylate adhesive grade were prepared, aged and tested for tensile shear bond strength as in Example 1.

The results are shown in Table 3.

TABLE 3

| OCTYLAMINE PRIMER IN VARIOUS SOLVENTS | | | | |
|---|---|---|---|---|
| | | Tensile Shear Bond Strength ($kg/cm^2$) | | |
| Primer | Solvent | Polyethylene/Polyethylene | | |
| | | Run 1 | Run 2 | Run 3 |
| n-Octylamine | Methylethylketone | 9 | 9 | 11 |
| n-Octylamine | Methylisobutylketone | 75 | 54 | 70 |
| n-Octylamine | Freon TA* | 77 | 75 | 53 |
| n-Octylamine | 1,1,1-trichlorethane | 0 | 10 | 7 |
| n-Octylamine | Methanol | 8 | 6 | 4 |
| Control (No primer) | Freon TA | 0 | 0 | 0 |

*Trade mark for azeotropic mixture of 1,1,2-trichloro-1,2,2-trifluoroethane and acetone.

## Claims

**1.** A process for conditioning a non-polar substrate for bonding with a cyanoacrylate adhesive, using an adhesion-promoting primer characterized in that the primer comprises a solution of a primary aliphatic amine of the general Formula (I):

$R{-}{-}NH_2$ (I)

in a solvent wherein R is a branched or straight-chained aliphatic group having from 6 to 20 carbon atoms and the concentration of the amine in the solvent is from 0.001-30% weight/volume.

**2.** A process as claimed in claim 1 wherein the solvent is a ketone or a mixture of a ketone and another solvent.

**3.** A process as claimed in claim 2 wherein the solvent is an acetone, methylethyl ketone, methylisobutyl ketone, diethyl ketone or a mixture of acetone and 1,1,2-trichloro-1,2,2-trifluoroethane.

**4.** A process as claimed in any of claims 1 to 3 wherein the concentration of the amine in the solvent is from 0.1-2% weight/volume.

**5.** A process as claimed in any of claims 1 to 4 wherein the primary aliphatic amine is a straight-chained octylamine, nonylamine or decylamine.

**6.** A method for bonding a non-polar substrate to another substrate which may be polar or non-polar, which comprises

(1) treating the non-polar substrate or substrates with an adhesion-promoting primer solution;

(2) allowing the primer solution to dry;

(3) applying a cyanoacrylate adhesive to either substrate or both substrates; and,

(4) mating the surfaces to be bonded; wherein the primer solution comprises a primary aliphatic amine of the general Formula (I):

(I) $R{-}{-}NH_2$

in a solvent wherein R is a branched or straight-chained aliphatic group having from 6 to 20 carbon atoms and the concentration of said amine in said solvent is from 0.001-30% weight/volume.

**7.** A method as claimed in claim 6 wherein the non-polar substrate is a polyolefin or copolyolefin.

**8.** A method as claimed in claim 6 wherein both substrates to be bonded are non-polar substrates and wherein the method comprises applying the adhesion-promoting primer to both substrates.

**9.** A method as claimed in any of claims 6 to 8 wherein the solvent is a ketone or a mixture of a ketone and another solvent.

**10.** A method as claimed in claim 9 wherein the solvent is an acetone, methylethyl ketone, methylisobutyl ketone, diethyl ketone or a mixture of acetone and 1,1,2-trichloro-1,2,2-trifluoroethane.

**11.** A method as claimed in any of claims 6 to 10 wherein the concentration of the amine in the solvent is from 0.1-2% weight/volume.

**12.** A two-part adhesive system for bonding non-polar substrates to each other or to polar substrates comprising:
(i) a cyanoacrylate adhesive, and
(ii) an adhesion-promoting primer as defined in claim 1.

## Revendications

**1.** Un procédé de traitement d'un substrat non polaire pour le coller avec un adhésif du type cyanoacrylate, faisant usage d'un primaire d'accrochage favorisant l'adhérence, caractérisé en ce que le primaire comprend une solution d'une amine aliphatique primaire de la Formule générale (I) :

$R\text{--}NH_2$ (I)

dans un solvant, où R est un groupe aliphatique à chaîne droite ou ramifiée ayant 6 à 20 atomes de carbone et la concentration de l'amine dans le solvant est de 0,001 à 30 % en poids/volume.

**2.** Un procédé tel que revendiqué dans la revendication 1, dans lequel le solvant est une cétone ou un mélange d'une cétone et d'un autre solvant.

**3.** Un procédé tel que revendiqué dans la revendication 2, dans lequel le solvant est l'acétone, la méthyléthylcétone, la méthylisobutylcétone, la diéthylcétone ou un mélange d'acétone et de 1,1,2-trichloro-1,2,2-trifluoréthane.

**4.** Un procédé tel que revendiqué dans l'une quelconque des revendications 1 à 3, dans lequel la concentration de l'amine dans le solvant est de 0,1 à 2 % en poids/volume.

**5.** Un procédé tel que revendiqué dans l'une quelconque des revendications 1 à 4, dans lequel l'amine aliphatique primaire est une octylamine, nonylamine ou décylamine à chaîne droite.

**6.** Un procédé pour coller un substrat non polaire à un autre substrat qui peut être polaire ou non polaire, qui consiste à
(1) traiter le substrat ou les substrats non polaires avec une solution de primaire favorisant l'adhérence ;
(2) laisser sécher la solution de primaire ;
(3) appliquer un adhésif du type cyano-acrylate à l'un des substrats ou aux deux substrats ; et
(4) assembler les surfaces à coller ;
dans laquelle la solution de primaire comprend une amine aliphatique primaire de la Formule générale (I) :

$R\text{--}NH_2$ (I)

dans un solvant, où R est un groupe aliphatique à chaîne droite ou ramifiée ayant 6 à 20 atomes de carbone et la concentration de ladite amine dans ledit solvant est de 0,001 à 30 % en poids/volume.

7. Un procédé tel que revendiqué dans la revendication 6, dans lequel le substrat non polaire est une polyoléfine ou une copolyoléfine.

8. Un procédé tel que revendiqué dans la revendication 6, dans lequel les deux substrats à coller sont des substrats non polaires, et le procédé comprend l'application au deux substrats du primaire favorisant l'adhérence.

9. Un procédé tel que revendiqué dans l'une quelconque des revendications 6 à 8, dans lequel le solvant est une cétone ou un mélange d'une cétone et d'un autre solvant.

10. Un procédé tel que revendiqué dans la revendication 9, dans lequel le solvant est l'acétone, la méthyléthylcétone, la méthylisobutylcétone, la diéthylcétone ou un mélange d'acétone et de 1,1,2-trichloro-1,2,2-trifluoréthane.

11. Un procédé tel que revendiqué dans l'une quelconque des revendications 6 à 10, dans lequel la concentration de l'amine dans le solvant est de 0,1 à 2 % en poids/volume.

12. Un système adhésif à deux composants pour coller des substrats non polaires entre eux ou à des substrats polaires, comprenant :
(i) un adhésif du type cyano-acrylate, et
(ii) un primaire favorisant l'adhérence tel que défini dans la revendication 1.

**Patentansprüche**

1. Verfahren zum Konditionieren eines nicht-polaren Substrates für die Bindung mit einem Cyanacrylatbindemittel, unter Verwendung eines adhäsionsfördernden Primers, dadurch gekennzeichnet, daß der Primer eine Lösung eines primären aliphatischen Amins der allgemeinen Formel (I)

$R\text{--}NH_2$

in einem Lösungsmittel enthält, worin R eine verzweigte oder geradkettige aliphatische Gruppe mit 6 - 20 C-Atomen ist und die Konzentration des Amins im Lösungsmittel 0,001 - 30 % Gewicht/Volumen beträgt.

2. Verfahren nach Anspruch 1, bei dem das Lösungsmittel ein Keton oder ein Gemisch eines Ketons und eines anderen Lösungsmittels ist.

3. Verfahren nach Anspruch 2, bei dem das Lösungsmittel ein Aceton, Methylethylketon, Methylisobutylketon, Diethylketon oder ein Gemisch von Aceton und 1,1,2-Trichlor-1,2,2-trifluorethan ist.

4. Verfahren nach einem der Ansprüche 1 bis 3, bei dem die Konzentration des Amins im Lösungsmittel 0,1 - 2 % Gewicht/Volumen beträgt.

5. Verfahren nach einem der Ansprüche 1 bis 4, bei dem das primäre aliphatische Amin ein geradkettiges Octylamin, Nonylamin oder Decylamin ist.

6. Verfahren zum Binden eines nicht-polaren Substrates an ein anderes Substrat, das polar oder nicht-polar sein kann, bei dem man
(1) das nicht-polare Substrat oder die Substrate mit einer adhäsionsfördernden Primerlösung behandelt;
(2) die Primerlösung trocknen läßt;
(3) ein Cyanacrylatklebemittel auf jedes oder beide Substrate aufbringt; und
(4) die zu verbindenden Flächen aneinanderlegt, worin die Primerlösung ein primäres aliphatisches Amin der allgemeinen Formel (I)

(I) $R\text{--}NH_2$

in einem Lösungsmittel enthält, wobei R eine verzweigtoder geradkettige aliphatische Gruppe mit 6

bis 20 C-Atomen ist und die Konzentration des Amins in dem Lösungsmittel 0,001 bis 30 % Gewicht/Volumen beträgt.

7. Verfahren nach Anspruch 6, bei dem das nicht-polare Substrat ein Polyolefin oder Copolyolefin ist.

8. Verfahren nach Anspruch 6, bei dem beide zu verbindenden Substrate nicht-polare Substrate sind und das Verfahren die Aufbringung des adhäsionsfördernden Primers auf beide Substrate einschließt.

9. Verfahren nach einem der Ansprüche 6 bis 8, bei dem das Lösungsmittel ein Keton oder ein Gemisch eines Ketons und eines anderen Lösungsmittels ist.

10. Verfahren nach Anspruch 9, bei dem das Lösungsmittel ein Aceton, Methylethylketon, Methylisobutylketon, Diethylketon oder ein Gemisch von Aceton und 1,1,2-Trichlor-1,2,2-trifluorethan ist.

11. Verfahren nach einem der Ansprüche 6 bis 10, bei dem die Konzentration des Amins in dem Lösungsmittel 0,1 bis 2 % Gewicht/Volumen beträgt.

12. Zweiteiliges Klebemittel-System für das Binden nicht-polarer Substrate aneinander oder an polare Substrate, enthaltend
(i) ein Cyanacrylat-Klebemittel, und
(ii) einen adhäsionsfördernden Primer wie in Anspruch 1 definiert.